# EUROPEAN PATENT APPLICATION

(11) **EP 4 844 989 A1**
(43) Date of publication of application: **25.11.2026**
(21) Application number: 25786715.0
(22) Date of filing: 10.04.2025
(51) Int. Cl.: H02K 1/18, H02K 15/0273

(54) **LAMINATED CORE, ROTARY ELECTRIC MACHINE, PRESSURIZING JIG, AND METHOD FOR MANUFACTURING LAMINATED CORE**

(30) Priority: 10.04.2024 JP 2024063560
(71) Applicant: Nippon Steel Corporation, Tokyo 100-8071 (JP)
(72) Inventor: KAMIKAWABATA, Masahito, Tokyo 100-8071 (JP)
(74) Representative: Vossius & Partner Patentanwälte Rechtsanwälte mbB
(86) International application number: PCT/JP2025/014310
(87) International publication number: WO 2025/216279

(57) **Abstract**

A laminated core (1) includes: a plurality of electrical steel sheets (10) that are laminated; and an adhesive portion (41) that is provided between the electrical steel sheets (10) adjacent to each other in a lamination direction and bonds the electrical steel sheets (10) together, in which the adhesive portion (41) includes a first adhesive portion (41A) that is provided in a first region (11) of the electrical steel sheets (10), and a second adhesive portion (41B) that is provided in a second region (12) different from the first region (11), and compressive stress remaining in the first region (11) where the first adhesive portion (41A) is provided is greater than compressive stress remaining in the second region (12) where the second adhesive portion (41B) is provided.

## Description

### TECHNICAL FIELD

The present invention relates to a laminated core, a rotary electric machine, a pressurizing jig, and a manufacturing method of a laminated core.

The present application claims priority based on Japanese Patent Application No. 2024-063560 filed in Japan on April 10, 2024, the contents of which are incorporated herein by reference.

### BACKGROUND ART

With the progress of electrification of automobiles, it is desired to further increase efficiency of a motor in order to extend a driving range. As one method for improving the efficiency, a method of reducing a sheet thickness of an electrical steel sheet used for a core has been considered. When the thickness of the electrical steel sheet is reduced, lamination and fixation by crimping becomes difficult, and thus, a lamination and fixation method using an adhesive member is being adopted.

For example, Patent Document 1 discloses a technique in which electrical steel sheets adjacent to each other in a lamination direction are bonded together by an adhesive portion.

### Citation List

### Patent Document

Patent Document 1: PCT International Publication No. WO 2020/129928

### SUMMARY OF INVENTION

### Technical Problem

When an electrical steel sheet is bonded and fixed, compressive stress is applied to the electrical steel sheet due to solidification and shrinkage of an adhesive, and thus, there is a possibility that magnetic characteristics such as iron loss of the electrical steel sheet are deteriorated. Therefore, if the influence of the compressive stress due to bonding can be reduced, the deterioration of the motor characteristics can be suppressed accordingly. Since a main purpose of bonding is to fix the laminated electrical steel sheets, it is not necessary to bond the entire electrical steel sheet surface as long as the required bonding strength (fixing force) is obtained as a whole. Therefore, if a laminated state can be maintained, it is considered that the influence of the compressive stress due to bonding on the motor characteristics can be suppressed by selecting a region having a small influence on the motor characteristics of the electrical steel sheet surface and partially bonding and fixing the region.

On the other hand, during operation of a rotary electric machine such as a motor, each electrical steel sheet constituting a core such as a stator of the rotary electric machine has a region (second region) in which a magnetic flux mainly flows in a plane view and a region (first region) in which a magnetic flux flows less than that in the region. That is, since the magnetic flux inherently flows less through the first region than through the second region, the influence of the solidification and shrinkage of the adhesive on the characteristics of the rotary electric machine is considered to be smaller in the first region than that in the second region. Therefore, it has been considered that the deterioration of the characteristics of the rotary electric machine due to the solidification and shrinkage of the adhesive can be suppressed while obtaining a necessary fixing force as a whole by increasing the fixing force by relatively strongly bonding the first region and compensating the shortage by relatively weakly bonding the second region.

The present disclosure has been made in view of the above-described problems, and an object of the present disclosure is to provide a laminated core, a rotary electric machine, a pressurizing jig, and a manufacturing method of a laminated core in which deterioration of magnetic characteristics due to bonding is suppressed while securing a necessary fixing force.

### Solution to Problem

<1> A laminated core according to an embodiment of the present disclosure includes: a plurality of electrical steel sheets that are laminated; and an adhesive portion that is provided between the electrical steel sheets adjacent to each other in a lamination direction and bonds the electrical steel sheets together, in which the adhesive portion includes: a first adhesive portion that is provided in a first region of the electrical steel sheet; and a second adhesive portion that is provided in a second region different from the first region, and in which compressive stress remaining in the first region where the first adhesive portion is provided is greater than compressive stress remaining in the second region where the second adhesive portion is provided.
<2> In the laminated core according to <1>, a bonding strength of the first adhesive portion may be greater than a bonding strength of the second adhesive portion.
<3> In the laminated core according to <1> or <2>, the laminated core may be a stator core, and the first adhesive portion may be provided in an annular shape on an outer peripheral side of a core back portion of the stator core.
<4> In the laminated core according to any one of <1> to <3>, the first adhesive portion may be provided within a range of 0% to 16% of a radius of the electrical steel sheet from an outer circumferential edge of the electrical steel sheet.
<5> In the laminated core according to any one of <1> to <4>, a bonding area fraction of the first adhesive portion on the electrical steel sheet may be 9% or more and 60% or less.
<6> A rotary electric machine according to an embodiment of the present disclosure includes: a stator or a rotor core that is the laminated core according to any one of <1> to <5>.
<7> A pressurizing jig according to an embodiment of the present disclosure is a pressurizing jig that is used for manufacturing a laminated core having a first adhesive portion and a second adhesive portion, the pressurizing jig including: a pressing surface that presses the first adhesive portion and the second adhesive portion, in which in the pressing surface, a first pressing portion corresponding to the first adhesive portion protrudes more than a second pressing portion corresponding to the second adhesive portion.
<8> A manufacturing method of the laminated core according to an embodiment of the present disclosure is a manufacturing method of the laminated core according to any one of <1> to <5>, the manufacturing method including: an identification step of identifying a region having a relatively small contribution to magnetic characteristics in a case where a first adhesive portion is provided on an electrical steel sheet constituting the laminated core, on a basis of an analysis result of an influence on the magnetic characteristics of the laminated core; and a determination step of determining a position at which the first adhesive portion is to be provided, the position being at least a part of the region on the electrical steel sheet identified in the identification step.
<9> The manufacturing method of the laminated core according to <8> may further include: a manufacturing step of manufacturing the laminated core according to determination in the determination step.

### Advantageous Effects of Invention

According to the present disclosure, it is possible to provide the laminated core, the rotary electric machine, the pressurizing jig, and the manufacturing method of a laminated core in which deterioration of magnetic characteristics due to bonding is suppressed while securing a necessary fixing force.

### BRIEF DESCRIPTION OF DRAWINGS

[FIG. 1] A cross-sectional view illustrating a laminated core according to an embodiment of the present disclosure.
[FIG. 2] A cross-sectional view illustrating a usage example using a pressurizing jig according to the embodiment of the present disclosure.
[FIG. 3] A flowchart illustrating a manufacturing method of a laminated core according to an embodiment of the present disclosure.
[FIG. 4] A diagram illustrating an iron loss distribution obtained by electromagnetic field analysis.
[FIG. 5] A diagram illustrating a correspondence relationship between the iron loss distribution and a first adhesive portion 41A1.
[FIG. 6] A diagram illustrating a correspondence relationship between the iron loss distribution and a first adhesive portion 41A2.
[FIG. 7] A diagram illustrating a correspondence relationship between the iron loss distribution and a first adhesive portion 41A3.
[FIG. 8] A diagram illustrating a correspondence relationship between the iron loss distribution and a first adhesive portion 41A4.
[FIG. 9] A diagram illustrating a correspondence relationship between the iron loss distribution and a first adhesive portion 41A5.

### DESCRIPTION OF EMBODIMENTS

Hereinafter, a laminated core, a pressurizing jig, and a manufacturing method of a laminated core according to an embodiment of the present disclosure will be described with reference to the drawings. The laminated core according to the present disclosure may be employed in, for example, a rotary electric machine including a rotor and a stator, such as an electric motor (motor) or a generator. Specifically, examples of the electric motor include an AC electric motor, more specifically a synchronous electric motor, and still more specifically a permanent magnet field type electric motor such as an interior magnet type. Such a type of electric motor is adopted appropriately in, for example, an electric vehicle.

### [Laminated Core]

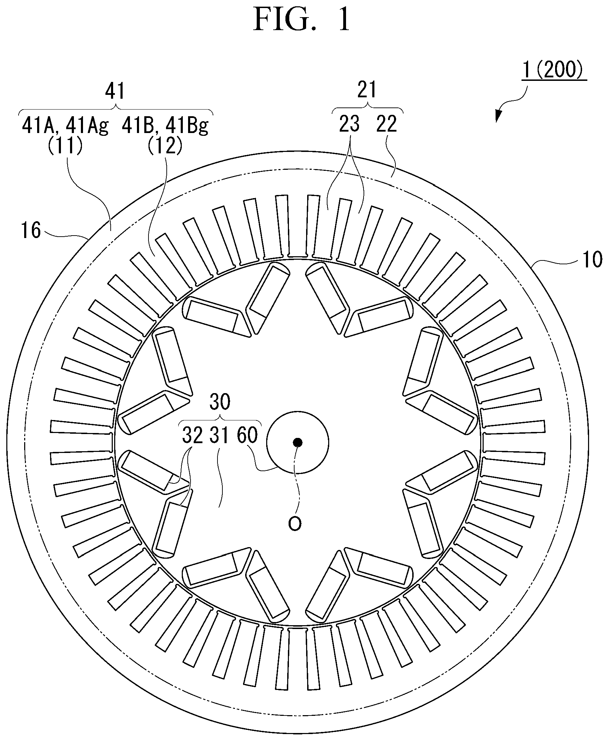

FIG. 1 is a cross-sectional view illustrating a laminated core 1 according to the present embodiment. A lamination direction of the laminated core 1 is referred to as an axial direction (central axis O direction), a radial direction of the laminated core 1 (a direction orthogonal to the central axis O of the laminated core 1) is referred to as a radial direction, and a circumferential direction of the laminated core 1 (a direction circling around the central axis O of the laminated core 1) is referred to as a circumferential direction.

As illustrated in FIG. 1, the laminated core 1 is, for example, a stator core 21.

The stator core 21 includes an annular core back portion 22 and a plurality of tooth portions 23.

The core back portion 22 is formed in a ring shape in a plane view in which the stator core 21 is viewed from the axial direction.

The plurality of tooth portions 23 protrude toward the inside in the radial direction from the core back portion 22 (toward the central axis O of the core back portion 22 along the radial direction). The plurality of tooth portions 23 are disposed at equal intervals in the circumferential direction. In the present embodiment, 48 tooth portions 23 are provided every 7.5 degrees of the central angle about the central axis O. The plurality of tooth portions 23 are formed in an equal shape and an equal size.

A winding (not illustrated) is wound around each tooth portion 23 to constitute a stator. The winding may be concentratedly wound or may be distributedly wound.

The laminated core 1 may be a rotor core 31 constituting the rotor 30. The rotor 30 may include the rotor core 31 disposed, for example, on the inside in the radial direction with respect to the stator core 21, a plurality of permanent magnets 32 installed in the rotor core 31, and a rotary shaft 60 fixed to the rotor core 31.

The rotor core 31 may be formed in an annular shape (ring shape) disposed coaxially with the stator core 21. In addition, in the rotor core 31, for example, a set of a plurality of permanent magnets 32 such as a set of two permanent magnets 32 may form one magnetic pole. A plurality of sets of permanent magnets 32 may be disposed at equal intervals in the circumferential direction.

When the laminated core 1 is adopted in a rotary electric machine 200 such as a motor, the rotor 30 may be an inner rotor type in which the rotor is disposed in the stator. In addition, the rotor 30 may be an outer rotor type in which the rotor is disposed outside the stator. The number of poles, the number of slots, the number of phases, and the like of the motor core can be appropriately changed.

The laminated core 1 is formed by laminating a plurality of electrical steel sheets 10 in a state of being bonded and fixed with an adhesive. The thickness of each electrical steel sheet 10 forming the laminated core 1 is only required to be appropriately determined in consideration of a magnetic characteristic improvement effect such as an iron loss improvement effect, a manufacturing cost, press punching workability, and the like. The electrical steel sheet 10 is formed by, for example, punching an electrical steel sheet serving as a base metal. In the present embodiment, as the electrical steel sheet 10, a non-oriented electrical steel sheet (for example, JIS C 2552:2014 or the like) is adopted, but a grain-oriented electrical steel sheet (for example, JIS C 2553:2019 or the like) may be adopted. The chemical composition of the electrical steel sheet 10 is not particularly limited. In order to improve the workability of the electrical steel sheet and magnetic characteristics such as the iron loss of the laminated core, insulating coatings are provided on both surfaces of the electrical steel sheet 10, but the thickness of the insulating coating (the thickness per one surface of the electrical steel sheet 10) is appropriately determined in consideration of insulation performance, a space factor, and the like in the electrical steel sheets 10 laminated to each other.

In addition, examples of the type of adhesive to be used for bonding and fixing the electrical steel sheet 10 include a thermosetting adhesive by polymerization bonding, an acrylic-based adhesive, a room-temperature curing adhesive, an anaerobic adhesive, an instantaneous adhesive, and an elastomer-containing acrylic-based adhesive.

Here, the electrical steel sheet 10 has a first region 11 and a second region 12 (see FIG. 1). The first region 11 and the second region 12 are determined on the basis of, for example, the distribution of the magnetic flux density when the rotary electric machine 200 is operated (driven) under one or more representative operating conditions (hereinafter, at the time of excitation). The first region 11 is a region where the magnetic flux does not flow at the time of excitation as compared with the second region 12 (a region having high magnetic resistance and low magnetic flux density), and is at least a partial region of such a region, for example, a region having low magnetic flux density, or the like. The first region 11 may include at least a part of a region that is not excited or hardly excited in the core due to the structure, winding conditions, and the like of the rotary electric machine 200. The second region 12 is a region where a relatively large amount of magnetic flux flows at the time of excitation (a region having low magnetic resistance and high magnetic flux density) and is not the first region 11.

For example, the first region 11 may be determined from a region having a magnetic flux density equal to or less than a predetermined threshold, and other regions may be set as the second region 12. The electrical steel sheet 10 may further include a third region, and a region other than the first region 11 determined as described above may be divided into the second region 12 and the third region such as a region where an adhesive portion is not provided, for example, based on the distribution of the magnetic flux density.

In short, the first region 11 is a region having a smaller contribution to a magnetic characteristic value such as iron loss (an iron loss value per unit volume or unit weight) than the second region 12. The contribution to the magnetic characteristic value can be determined, for example, by modeling the laminated core 1 on software and simulating the distribution of the magnetic characteristics. Note that selection may be made on the basis of empirical knowledge of a skilled person or the like.

In addition, as described above, in the laminated core 1, the adjacent electrical steel sheets 10 are bonded and fixed together with an adhesive. That is, the laminated core 1 includes an adhesive portion 41 which is provided between the electrical steel sheets 10 adjacent to each other in the lamination direction and bonds the electrical steel sheets 10 together. The adhesive portion 41 is formed after the above-described adhesive is solidified (cured). The adhesive portion 41 may be provided on the entire surface of the electrical steel sheet 10, or may be partially provided on the surface of the electrical steel sheet 10.

Hereinafter, the adhesive portion 41 will be described in detail.

As illustrated in FIG. 1, the adhesive portion 41 includes a first adhesive portion 41A that is provided in the first region 11 (described above) of the electrical steel sheet 10, and a second adhesive portion 41B that is provided in the second region 12 (a region other than the first adhesive portion 41A in FIG. 1) that becomes a region different from the first adhesive portion 41A. In other words, a region where the first adhesive portion 41A is provided is the first region 11, and a region where the second adhesive portion 41B is provided is the second region 12.

Furthermore, in the laminated core 1, the compressive stress remaining in the first region 11 where the first adhesive portion 41A is provided is higher than the compressive stress remaining in the second region 12 where the second adhesive portion 41B is provided. That is, in the electrical steel sheet 10, a compressive stress distribution corresponding to the first region 11 and the second region 12 is generated. Such a compressive stress distribution remaining on the electrical steel sheet 10 may be formed by changing the type of the adhesive forming the first adhesive portion 41A and the second adhesive portion 41B. That is, a first adhesive 41Ag forming the first adhesive portion 41A and a second adhesive 41Bg forming the second adhesive portion 41B may be different adhesives.

Alternatively, the same type of adhesive may be used by using an adhesive of a type that exhibits bonding strength corresponding to the magnitude of pressure applied during bonding. That is, the first adhesive 41Ag forming the first adhesive portion 41A and the second adhesive 41Bg forming the second adhesive portion 41B may be the same adhesive. In this case, the above-described compressive stress distribution may be formed by changing the pressure during bonding, for example, making the pressure during bonding applied to the first region 11 greater than the pressure during bonding applied to the second region 12.

Such a compressive stress distribution on the electrical steel sheet 10 or a difference in compressive stress between regions can be measured by, for example, an X-ray diffraction method (such as an XRD method). The X-ray diffraction method is described in detail in the following document. Document [Standard for X-ray Stress Measurement Method (2002 version), Iron and Steel ed. (JSMS SD-5-02:2002), published by The Society of Materials Science, Japan]

In the laminated core 1, when the compressive residual stress is greater than a predetermined threshold (for example, 3 MPa, 5 MPa, or the like) or more as compared with other regions, it can be recognized as a region (first adhesive portion 41A) having a large bonding force. The threshold may be set to a value greater than a variation range of the measurement value such as a measurement error.

The region (first adhesive portion 41A) having a large bonding force is pressed by a protrusion of a pressurizing jig 100 described later. Therefore, there is a possibility that a dimple is generated as compared with other regions. That is, there is a possibility that, in the region where the bonding force is large, the first adhesive portion 41A becomes thinner than the second adhesive portion 41B by being strongly pressurized. Therefore, a method is considered which confirms and recognizes the region (first adhesive portion 41A) having a large bonding force, for example, by observing the surface or cross section of the laminated core 1. Furthermore, in this method, it is also possible to confirm and recognize the region (first adhesive portion 41A) in which the bonding strength is changed by partial pressurization.

For example, a method is also considered which confirms that the bonding strength of the first adhesive portion 41A is greater than the bonding strength of the second adhesive portion 41B in a test (JIS) of the bonding strength such as a peel bonding strength test of an adhesive.

In addition, the bonding strength of the first adhesive portion 41A or the second adhesive portion 41B may be measured by a shear strength measurement method. In the shear strength measurement method, for example, Autograph AGS-10kNX (Shimadzu Corporation) is used as a tensile tester. Test conditions are as follows. That is, the tensile form is a shear tensile test, the tensile temperature is 25°C, and the tensile speed is 50 mm/min. In the measurement of the shear strength, a tensile test is performed until fracture of a test piece (the first adhesive portion 41A or the second adhesive portion 41B), and when a plurality of test pieces can be taken, the average value of maximum strengths until fracture of each test piece is taken as a shear bonding strength. Furthermore, a value obtained by dividing the obtained value of the shear bonding strength by a bonding area is determined as room-temperature bonding strength. Accordingly, it is also possible to confirm that the bonding strength of the first adhesive portion 41A is greater than the bonding strength of the second adhesive portion 41B.

Note that each of the first adhesive portion 41A and the second adhesive portion 41B may include a solidified portion of one adhesive, or may include solidified portions of a plurality of adhesives disposed regularly or irregularly and spaced apart from each other.

In a case where the electrical steel sheet 10 is bonded and fixed, compressive stress is applied to the electrical steel sheet 10 when the adhesive solidifies and shrinks, and thus, there is a possibility that the magnetic characteristics of the electrical steel sheet 10 are deteriorated. However, in the laminated core 1 according to the present embodiment, for example, the bonding strength (bonding force) of a region having a small influence on the magnetic characteristics (the characteristics of the rotary electric machine 200 such as motor characteristics) such as iron loss (first region 11) is made higher than that of a region having a large influence on the magnetic characteristics, and the bonding strength of a region having a large influence on the magnetic characteristics (second region 12) is weakened, thereby achieving reduction of the compressive stress applied to the region. Accordingly, it is possible to strongly bond and fix the electrical steel sheet 10 in the first region 11 while reducing the compressive stress applied to the electrical steel sheet 10 due to the solidification and shrinkage of the adhesive in the second region 12, and thus, it is possible to suppress deterioration of the magnetic characteristics due to bonding while securing the required bonding strength as the entire laminated core 1.

Next, specific arrangement positions of the first adhesive portion 41A and the second adhesive portion 41B will be described.

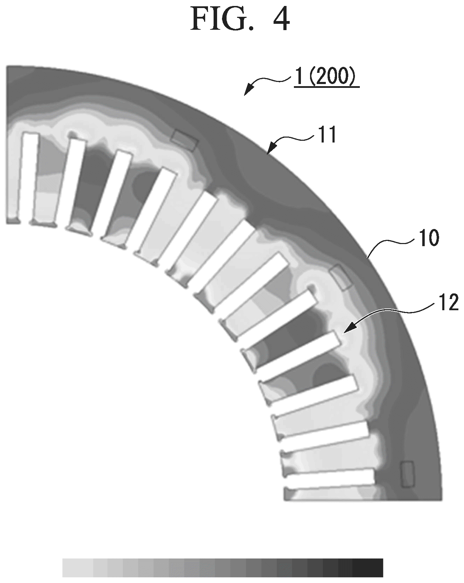

The distribution of the magnetic flux density at the time of excitation is smaller on the outer peripheral side of the core back portion 22 of the stator core 21 than on the inner peripheral side thereof and the tooth portion 23. In addition, the core back portion 22 includes a region that is hardly excited (a region on a dark semicircle in FIG. 4). Therefore, the first region 11 may be located on the outer circumferential edge 16 side of the annular core back portion 22. That is, the first region 11 may be provided, for example, in an annular shape at a position between the outer circumferential edge 16 and a position radially inside of the outer circumferential edge 16 by a predetermined distance. At this time, the first adhesive portion 41 A may be provided in a band shape at a solidified portion of one adhesive or in a linear shape at solidified portions of a plurality of adhesives along the outer circumferential edge 16 of the core back portion 22. There may be a region where the first adhesive portion 41A does not exist (non-bonding region) between the first adhesive portion 41A and the outer circumferential edge 16 of the core back portion 22. The width of the band-shaped first adhesive portion may be constant or may be partially changed.

On the other hand, since the second region 12 is at least a part of a region other than the first region 11, the second adhesive portion 41B is provided in a portion other than the first adhesive portion 41A in the core back portion 22 of the stator core 21. For example, when the first adhesive portion 41A is annularly provided on the outer peripheral side of the core back portion 22 as described above, the second adhesive portion 41B is disposed on the inside of the first adhesive portion 41A in the radial direction.

In the embodiment illustrated in FIG. 1, each electrical steel sheet 10 is divided into two regions of the first region 11 and the second region 12, and the adhesive portion 41 is provided on the entire surface of each electrical steel sheet 10. The first adhesive portion 41A and the second adhesive portion 41B are formed of one solidified portion. In addition, in a state where one type of adhesive is applied to at least a part between two electrical steel sheets 10, solidification (curing) is performed in a state where the pressure applied in the lamination direction is changed between the first region 11 and the second region 12 of the electrical steel sheet 10, whereby the first adhesive portion 41A and the second adhesive portion 41B are provided on each electrical steel sheet 10.

However, the present invention is not limited to the present embodiment. As the adhesive applied to the first region 11 and the second region 12, different types of adhesives having different bonding strengths after solidification may be used. In addition, the adhesive portion 41 may not be provided on the entire surface between the electrical steel sheets 10. Specifically, at least one of the first adhesive portion 41A and the second adhesive portion 41B may be constituted by a plurality of solidified portions separated from each other. Alternatively, the electrical steel sheet 10 may further include the third region having no adhesive portion. A combination thereof may be used.

As described above, since the first adhesive portion 41A is provided on the outer peripheral side of the core back portion 22 of the stator core 21 having a small influence on magnetic characteristics such as iron loss, for example, the compressive stress of the second region 12 having a large influence on the magnetic characteristics is reduced by the second adhesive portion 41B while securing the required bonding strength by the first adhesive portion 41A in the first region 11 having a small influence on the magnetic characteristics, so that the deterioration of the magnetic characteristics as a whole can be further suppressed.

The first adhesive portion 41 A is preferably provided within a range of 0% to 16% of the radius of the electrical steel sheet 10 from the outer circumferential edge 16 of the electrical steel sheet 10 in a plane view in which the electrical steel sheet 10 is viewed from the lamination direction. Accordingly, since the first adhesive portion 41 A can be disposed on the outer circumferential edge 16 side of the electrical steel sheet 10, the deterioration of the magnetic characteristics such as iron loss deterioration can be further suppressed. The first adhesive portion 41A is more preferably provided within a range of 0% to 6%, still more preferably from 0% to 3% of the radius of the electrical steel sheet 10 from the outer circumferential edge 16 of the electrical steel sheet 10.

In the plane view in which the electrical steel sheet 10 is viewed from the lamination direction, a bonding area fraction of the first adhesive portion 41A on the electrical steel sheet 10 is preferably 9% or more and 60% or less, and more preferably 10% or more and 60% or less in order to secure an appropriate fixing force. The bonding area fraction of the first adhesive portion 41A on the electrical steel sheet 10 is preferably 20% or less since the deterioration of the magnetic characteristics increases when the bonding area fraction is excessively large. That is, the bonding area fraction is preferably 9% or more and 20% or less, or 10% or more and 20% or less. The bonding area fraction of the first adhesive portion 41A on the electrical steel sheet 10 is a ratio of an area of a region where the first adhesive portion 41A is provided to an area of the electrical steel sheet 10. The region where the first adhesive portion 41A is provided is a region of the electrical steel sheet 10 where a cured adhesive is provided without being divided. The area of the region where the first adhesive portion 41A is provided is obtained, for example, by photographing the electrical steel sheet 10 after peeling and performing image analysis on the photographing result.

Note that all the adhesive portions 41 provided between the electrical steel sheets 10 are manufactured so as to have substantially the same position in the plane view.

Although a case where the laminated core 1 is the stator core 21 has been described above as an example, the laminated core 1 may be the rotor core 31. The first region 11 and the second region 12 of the electrical steel sheet 10 constituting the rotor core 31 are determined on the basis of the distribution of the magnetic flux density on the electrical steel sheet 10 at the time of excitation, or the like. For example, the first region 11 may be provided on the rotary shaft 60 side, or may be provided in a ring shape of the like.

### [Rotary electric machine]

The rotary electric machine 200 includes the stator core 21 or the rotor core which is the above-described laminated core 1. Since the rotary electric machine 200 according to the present embodiment includes the stator core 21 or the rotor core which is the laminated core 1 described above, it is possible to provide the rotary electric machine 200 with improved performance by further suppressing the deterioration of the magnetic characteristics such as the deterioration of iron loss while securing the required bonding strength.

### [Pressurizing jig]

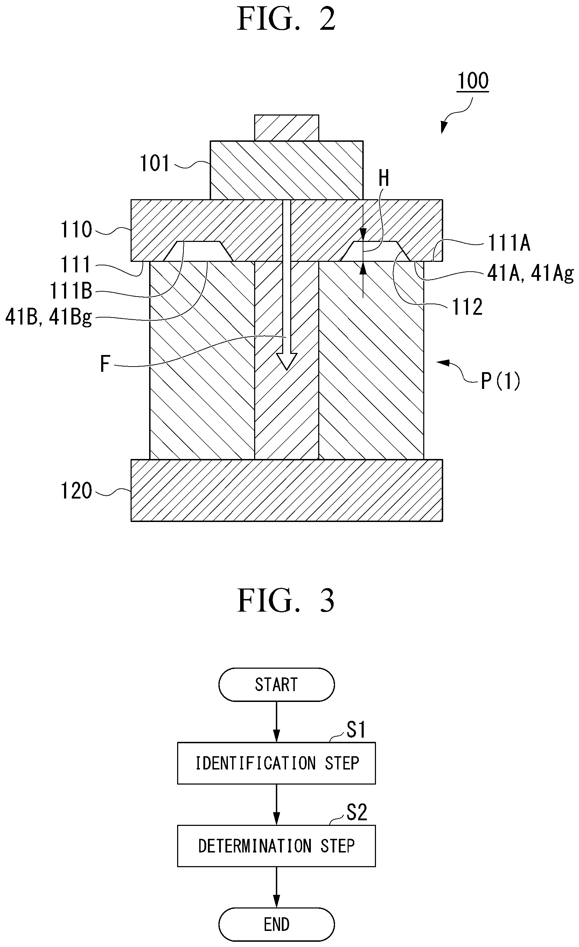

The pressurizing jig 100 used for manufacturing the laminated core 1 according to the above-described embodiment will be described. FIG. 2 is a schematic view illustrating a usage example of the pressurizing jig 100. The pressurizing jig 100 is used in a case where pressure application is required for bonding, for example, mainly in a case where an adhesive coating is provided on the electrical steel sheet 10.

The pressurizing jig 100 is a jig for pressing, for bonding and fixing, a laminate of at least a part of a plurality of electrical steel sheets 10 constituting the laminated core 1, with an adhesive interposed therebetween (hereinafter, a core portion P) at the time of manufacturing the laminated core 1. As illustrated in FIG. 2, the pressurizing jig 100 includes a first member 110 having unevenness on a pressing surface 111 that presses the core portion P, for example, while contacting it. Furthermore, the core portion P is bonded by applying pressure to the core portion P through the first member 110 by a pressing portion 101 of a pressing device. The pressure may be applied after the core portion P is heated to a predetermined temperature.

More specifically, in the pressing surface 111 of the first member 110, a surface (region) corresponding to a region where the first adhesive portion 41A is formed in the first region 11 of the electrical steel sheet 10 protrudes more than a surface (region) corresponding to a region where the second adhesive portion 41B is formed in the lamination direction of the laminated core 1. That is, the surface (region) corresponding to the first adhesive portion 41A has a convex shape in the lamination direction of the laminated core 1, and the surface (region) corresponding to the second adhesive portion 41B has a concave shape in the lamination direction of the laminated core 1. As described above, the pressing surface 111 includes a first pressing portion 111A (protrusion) configured to relatively strongly press the region corresponding to the first adhesive portion 41A and a second pressing portion 111B (recessed portion) configured to relatively weakly press the region corresponding to the second adhesive portion 41B.

In short, in the pressurizing jig 100, the pressing surface 111 has unevenness such that a pressurizing force in a desired region in the core portion P becomes higher than that in other regions at the time of bonding. The shape of the unevenness of the pressing surface 111 in a plane view in which the laminated core 1 is viewed from the lamination direction is designed according to the shape of the region to be actively pressurized. Accordingly, in the region corresponding to the protrusion (first pressing portion 111A), the pressure at the time of pressing becomes higher than in the region corresponding to the recessed portion (second pressing portion 111B). Therefore, when the adhesive used for bonding and fixing the laminated core 1 is of a type that exhibits bonding strength corresponding to the magnitude of the pressure applied at the time of bonding, the first adhesive portion 41A and the second adhesive portion 41B can be formed by applying pressure to the core portion Ponce.

In the embodiment illustrated in FIG. 2, the pressurizing jig 100 (first member 110) is a member in which unevenness is formed on a plate-shaped member such as a die in which unevenness is formed in a thickness direction on a metal sheet having a predetermined thickness. In addition, by being pressed by the pressing portion 101, the first pressing portion 111A of the first member 110 presses the first region 11 (first adhesive portion 41A) provided on the outer peripheral side of the core back portion 22, and the second pressing portion 111B presses the second region 12 (second adhesive portion 41B) other than the first region 11.

In addition, the pressing surface 111 includes a taper portion 112 that connects the first pressing portion 111A and the second pressing portion 111B. That is, the first pressing portion 111A and the second pressing portion 111B are smoothly connected to each other, and are formed such that the pressurizing force gradually changes. As a constitution in which the pressurizing force gradually changes, for example, the taper portion 112 may be gradually inclined at a constant rate or may change in a quadratic curve manner.

In the embodiment illustrated in FIG. 2, the first member 110 is disposed above the core portion P with the pressing surface 111 facing downward. In addition, in a state where the core portion P is supported from below by disposing the core portion P on the upper surface of the second member 120 fixedly disposed below the core portion P, the pressing portion 101 of the pressing device presses the first member 110 in an arrow F direction (downward in the lamination direction), thereby applying pressure to the core portion P to perform bonding and fixing.

However, the present invention is not limited to the above-described embodiments. For example, the first member 110 may be disposed below and the second member 120 may be disposed above. Furthermore, in addition to the first member 110, unevenness may also be formed on the support surface of the core portion P in the second member 120 in accordance with the unevenness of the pressing surface 111 of the first member 110. In addition, the first pressing portion 111A and the second pressing portion 111B of the first member 110 may not include the taper portion 112, and may be connected by, for example, a stepped part having a single step shape.

Note that FIG. 2 schematically illustrates the shape of the pressurizing jig 100 for easy understanding, and the actual dimensions and the like of the pressurizing jig 100 are different. For example, in the arrow view of FIG. 2 (viewing from the side of the laminated core 1), a difference H (µm) of the unevenness of the pressing surface 111 is provided. The difference H may be determined by determining the compressive stress to be applied to the electrical steel sheet 10, and, through experiments, calculation, or the like, calculating the pressure during bonding at which the bonding strength according to the determined compressive stress is obtained and calculating the difference H at which the pressure during bonding is obtained.

According to the pressurizing jig 100 described above, the unevenness formed on the pressing surface 111 enables provision of the pressure distribution on the surface of the electrical steel sheet 10 in one pressurization. Therefore, at the time of bonding and fixing, by one application of pressure, a higher pressure can be applied to a region of the electrical steel sheet 10 where the first adhesive portion 41A is to be formed than to a region where the second adhesive portion 41B is to be formed. Therefore, since the first adhesive portion 41A and the second adhesive portion 41B can be efficiently formed, the manufacturing cost of the laminated core 1 can be reduced.

### [Manufacturing method of laminated core]

A manufacturing method S of the laminated core 1 according to the above-described embodiment will be described. As illustrated in FIG. 3, the manufacturing method S of the laminated core 1 according to the above-described embodiment includes an identification step S1 and a determination step S2.

The identification step S1 identifies a region having a relatively small contribution to the magnetic characteristics in a case where the first adhesive portion 41A is provided on the electrical steel sheet 10 constituting the laminated core 1, on the basis of the analysis result of the influence on the magnetic characteristics such as the iron loss of the laminated core 1.

In the determination step S2, the first region 11 is determined which is provided with the first adhesive portion 41A and is at least a part of the region on the electrical steel sheet 10 identified in identification step S1. In addition, in the electrical steel sheet 10, the second region 12 is determined for a region of the electrical steel sheet 10 other than the determined first region 11. The second region 12 may be at least a part of the region of the electrical steel sheet 10 other than the first region 11. In the determination step S2, the third region may be determined after the first region 11 is determined. The third region is determined in at least a part of a region other than the first region 11 and the second region 12. The third region may be determined together with the second region 12 or after the determination of the second region 12.

The manufacturing method S of the laminated core 1 includes a manufacturing step S3 of manufacturing the laminated core 1 according to the determination of the determination step S2.

### [Examples]

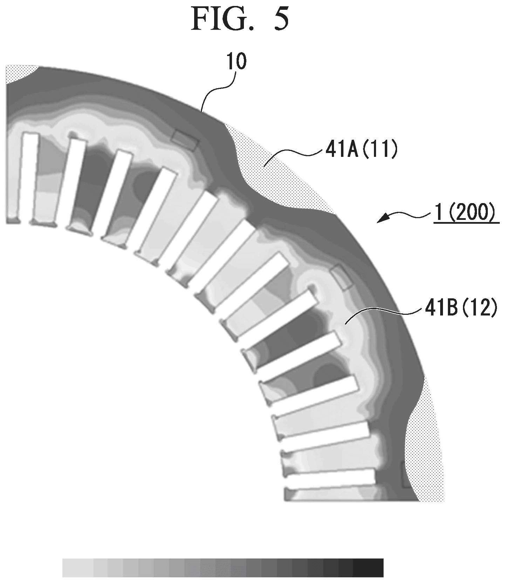

FIG. 4 illustrates a result of confirming which region has a small iron loss value when the iron loss distribution is obtained by electromagnetic field analysis. In FIG. 4, a dark color portion is a region having a small iron loss value, and a light color portion is a region having a large iron loss value. FIGS. 5 to 9 illustrate a correspondence relationship between the iron loss distribution and the first adhesive portion 41A (first adhesive portions 41A1 to 41A5).

Note that in the lower part of FIGS. 4 to 9, a grayscale chart is attached as a legend of shading.

In a first example illustrated in FIG. 5, a region having the smallest iron loss value was selected as the first region 11, and the first adhesive portion 41A (first adhesive portion 41A1) was provided therein. That is, in the first example, the region having the smallest iron loss value and the first adhesive portion 41A1 substantially coincide with each other. The first adhesive portion 41A1 is disposed in a substantially semicircular shape at a plurality of places in contact with the outer circumferential edge 16 of the electrical steel sheet 10. The bonding area fraction of the first adhesive portion 41A1 on the electrical steel sheet 10 is about 9%.

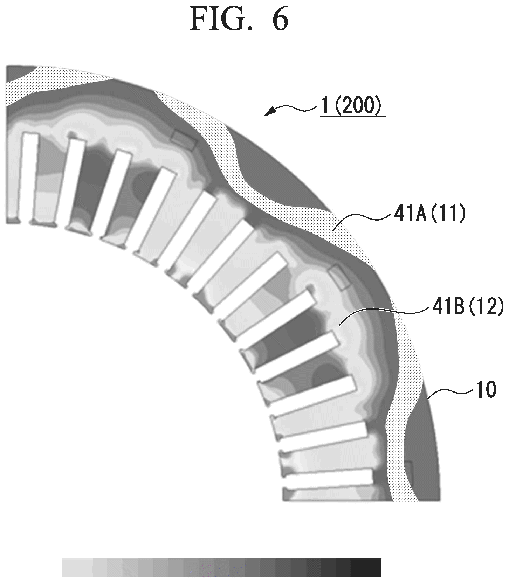

In a second example illustrated in FIG. 6, a region having a small iron loss value adjacent to the region having the smallest iron loss value was selected as the first region 11, and the first adhesive portion 41A (first adhesive portion 41A2) was provided therein. In the second example, the first adhesive portion 41A2 is disposed on the inside of the region having the smallest iron loss value. The first adhesive portion 41A2 has a band shape that contacts or separates from the outer circumferential edge 16 along the outer circumferential edge 16 of the electrical steel sheet 10. The bonding area fraction of the first adhesive portion 41A2 on the electrical steel sheet 10 is about 13%.

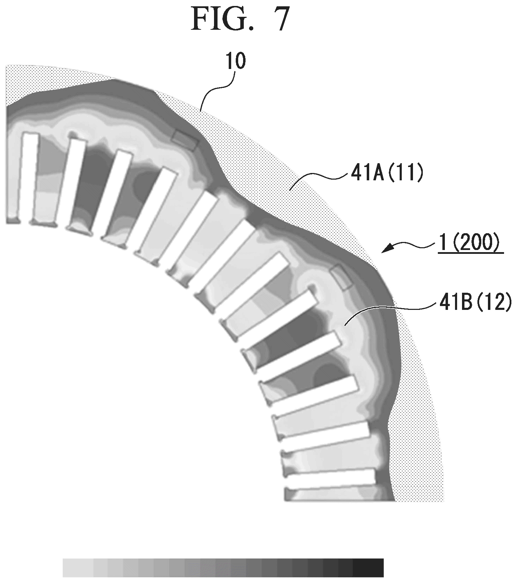

In a third example illustrated in FIG. 7, both the region selected in the first example and the region selected in the second example were selected as the first region 11, and the first adhesive portion 41A (first adhesive portion 41A3) was provided therein. In the third example, the first adhesive portion 41A3 is disposed so as to substantially cover the entire region having a small iron loss value. The first adhesive portion 41A3 has a shape in which the outer side is in contact with most of the outer circumferential edge 16 of the electrical steel sheet 10 and the inside undulates in a wave shape. The bonding area fraction of the first adhesive portion 41A3 on the electrical steel sheet 10 is about 22%.

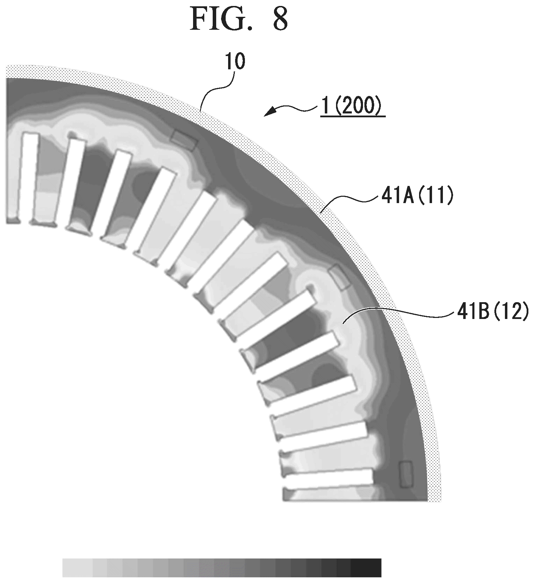

In a fourth example illustrated in FIG. 8, a range within about 3% in the radial direction from the outer circumferential edge 16 of the electrical steel sheet 10 was selected as the first region 11, and the first adhesive portion 41A (first adhesive portion 41A4) was provided therein. In the fourth example, a part of the region having the smallest iron loss value is included in the first adhesive portion 41A4. The first adhesive portion 41A4 has a thin ring shape along the outer circumferential edge 16 of the electrical steel sheet 10. The bonding area fraction of the first adhesive portion 41A4 on the electrical steel sheet 10 is about 10%.

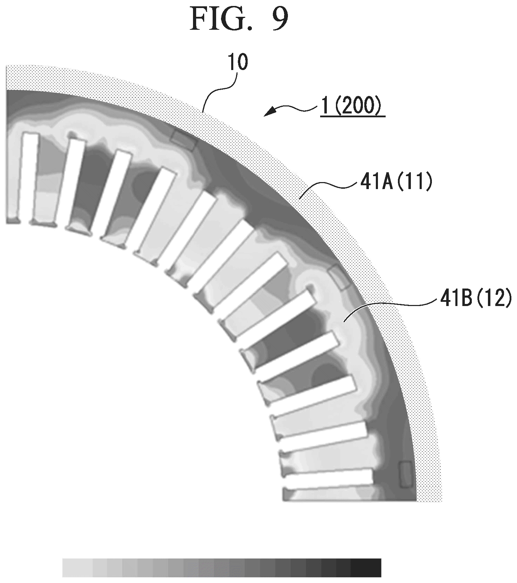

In a fifth example illustrated in FIG. 9, a range within about 6% in the radial direction from the outer circumferential edge 16 of the electrical steel sheet 10 was selected as the first region 11, and the first adhesive portion 41A (first adhesive portion 41A5) was provided therein. In the fifth example, most of the region having the smallest iron loss value is included in the first adhesive portion 41A5. The first adhesive portion 41A5 has a ring shape, which is thicker than the first adhesive portion 41A4, along the outer circumferential edge 16 of the electrical steel sheet 10. The bonding area fraction of the first adhesive portion 41A5 on the electrical steel sheet 10 is about 20%.

Although the preferred embodiments of the present invention have been described in detail with reference to the accompanying drawings, the present invention is not limited to such examples. It is obvious that a person having ordinary knowledge in the technical field to which the present invention belongs can conceive various changes or modifications within the scope of the technical idea described in the claims, and it is naturally understood that these also belong to the technical scope of the present invention.

The shape of the laminated core 1 is not limited only to the forms described in the above-described embodiment. The dimensions of the outer diameter and the inner diameter of the laminated core 1, the lamination thickness, and the like can be arbitrarily designed according to desired characteristics of the laminated core 1. In addition, the number of slots of the stator core 21, a dimensional proportion between the circumferential direction and the radial direction of the tooth portion 23, a dimensional proportion between the tooth portion 23 and the core back portion 22 in the radial direction, and the like can be arbitrarily designed according to desired characteristics of the laminated core 1. In addition, in the embodiment described above, the stator core 21 has been described as an example of the laminated core 1, but the laminated core 1 may be a rotor core, and the present invention can be similarly applied.

### INDUSTRIAL APPLICABILITY

According to the present disclosure, it is possible to provide the laminated core, the rotary electric machine, the pressurizing jig, and the manufacturing method of a laminated core in which deterioration of magnetic characteristics due to bonding is suppressed while securing a necessary fixing force. Therefore, the industrial applicability is large.

### REFERENCE SIGNS LIST

1 Laminated core
10 Electrical steel sheet
11 First region
12 Second region
21 Stator core
22 Core back portion
23 Tooth portion
30 Rotor
31 Rotor core
32 Permanent magnet
41 Adhesive portion
41A First adhesive portion
41Ag First adhesive
41B Second adhesive portion
41Bg Second adhesive
100 Pressurizing jig
110 First member
111 Pressing surface
111A First pressing portion
111B Second pressing portion
120 Second member
200 Rotary electric machine
S Manufacturing method
S1 Identification step
S2 Determination step
S3 Manufacturing step

## Claims

1. A laminated core comprising:
a plurality of electrical steel sheets that are laminated; and
an adhesive portion that is provided between the electrical steel sheets adjacent to each other in a lamination direction and bonds the electrical steel sheets together,
wherein the adhesive portion includes:
a first adhesive portion that is provided in a first region of the electrical steel sheet; and
a second adhesive portion that is provided in a second region different from the first region, and
wherein compressive stress remaining in the first region where the first adhesive portion is provided is greater than compressive stress remaining in the second region where the second adhesive portion is provided.

2. The laminated core according to claim 1, wherein a bonding strength of the first adhesive portion is greater than a bonding strength of the second adhesive portion.

3. The laminated core according to claim 1, wherein
the laminated core is a stator core, and
the first adhesive portion is provided in an annular shape on an outer peripheral side of a core back portion of the stator core.

4. The laminated core according to claim 3, wherein the first adhesive portion is provided within a range of 0% to 16% of a radius of the electrical steel sheet from an outer circumferential edge of the electrical steel sheet.

5. The laminated core according to claim 3, wherein a bonding area fraction of the first adhesive portion on the electrical steel sheet is 9% or more and 60% or less.

6. A rotary electric machine comprising: a stator core or a rotor core that is the laminated core according to any one of claims 1 to 5.

7. A pressurizing jig that is used for manufacturing a laminated core having a first adhesive portion and a second adhesive portion, the pressurizing jig comprising:
a pressing surface that presses the first adhesive portion and the second adhesive portion, wherein
in the pressing surface, a first pressing portion corresponding to the first adhesive portion protrudes more than a second pressing portion corresponding to the second adhesive portion.

8. A manufacturing method of the laminated core according to any one of claims 1 to 5, the manufacturing method comprising:
an identification step of identifying a region having a relatively small contribution to magnetic characteristics in a case where a first adhesive portion is provided on an electrical steel sheet constituting the laminated core, on a basis of an analysis result of an influence on the magnetic characteristics of the laminated core; and
a determination step of determining a position at which the first adhesive portion is to be provided, the position being at least a part of the region on the electrical steel sheet identified in the identification step.

9. The manufacturing method of the laminated core according to claim 8, further comprising: a manufacturing step of manufacturing the laminated core according to determination of the determination step.

## Amended claims

### Amended claims under Art. 19.1 PCT

1. A laminated core comprising:
a plurality of electrical steel sheets that are laminated; and
an adhesive portion that is provided between the electrical steel sheets adjacent to each other in a lamination direction and bonds the electrical steel sheets together,
wherein the adhesive portion includes:
a first adhesive portion that is provided in a first region of the electrical steel sheet; and
a second adhesive portion that is provided in a second region different from the first region,
wherein the first region is at least a partial region of a region where the magnetic flux does not flow at the time of excitation as compared with the second region, and
wherein compressive stress remaining in the first region where the first adhesive portion is provided is greater than compressive stress remaining in the second region where the second adhesive portion is provided.

2. The laminated core according to claim 1, wherein a bonding strength of the first adhesive portion is greater than a bonding strength of the second adhesive portion.

3. The laminated core according to claim 1, wherein
the laminated core is a stator core, and
the first adhesive portion is provided in an annular shape on an outer peripheral side of a core back portion of the stator core.

4. The laminated core according to claim 3, wherein the first adhesive portion is provided within a range of 0% to 16% of a radius of the electrical steel sheet from an outer circumferential edge of the electrical steel sheet.

5. The laminated core according to claim 3, wherein a bonding area fraction of the first adhesive portion on the electrical steel sheet is 9% or more and 60% or less.

6. The laminated core according to claim 1, wherein the first adhesive forming the first adhesive portion and the second adhesive forming the second adhesive portion are a same type of adhesive.

7. The laminated core according to claim 6, wherein the adhesive portion is provided on the entire surface between the electrical steel sheets adjacent to each other in the lamination direction.

8. A rotary electric machine comprising: a stator core or a rotor core that is the laminated core according to any one of claims 1 to 7.

9. A pressurizing jig that is used for manufacturing a laminated core having a first adhesive portion and a second adhesive portion according to any one of claims 1 to 7, the pressurizing jig comprising:
a pressing surface that presses the first adhesive portion and the second adhesive portion, wherein
in the pressing surface, a first pressing portion corresponding to the first adhesive portion protrudes more than a second pressing portion corresponding to the second adhesive portion.

10. A manufacturing method of the laminated core according to any one of claims 1 to 7, the manufacturing method comprising:
an identification step of identifying a region having a relatively small contribution to magnetic characteristics in a case where a first adhesive portion is provided on an electrical steel sheet constituting the laminated core, on a basis of an analysis result of an influence on the magnetic characteristics of the laminated core; and
a determination step of determining a position at which the first adhesive portion is to be provided, the position being at least a part of the region on the electrical steel sheet identified in the identification step.

11. The manufacturing method of the laminated core according to claim 10, further comprising: a manufacturing step of manufacturing the laminated core according to determination of the determination step.

Statement under Art. 19.1 PCT
Claim 1 has been amended as per the attached sheet. The basis for this amendment is described in paragraphs [0017] and [0018] of the specification of the present application. This amendment clarified that in claim 1, "the first region is at least a partial region of a region where the magnetic flux does not flow at the time of excitation as compared with the second region".

Claim 6 has been amended as per the attached sheet. The basis for this amendment is described in claim 1 and paragraph [0022] of the specification of the present application.

Claim 7 has been amended as per the attached sheet. The basis for this amendment is described in claim 1 and paragraph [0020] of the specification of the present application.

Claims 8 and 9 have been amended as per the attached sheet. The basis for this amendment is described in paragraph [0007] of the specification of the present application.

Claim 10 has been added. The basis for this amendment is described in paragraphs [0007] and [0038] of the specification of the present application. This amendment clarified that in claim 10, "a first adhesive portion and a second adhesive portion" are according to any one of claims 1 to 7.

Claim 11 has been added. The basis for this amendment is described in paragraph [0007] of the specification of the present application.

Therefore, no new matter is added.
